# EUROPÄISCHE PATENTSCHRIFT

(11) **EP 1 543 910 B1**
(45) Veröffentlichungstag und Bekanntmachung des Hinweises auf die Patenterteilung: **23.12.2009**
(21) Anmeldenummer: 03029384.9
(22) Anmeldetag: 19.12.2003
(51) Int. Cl.: B23K 9/28

(54) **Schweissbrenner**
Welding nozzle
Ajutage de soudage

(43) Veröffentlichungstag der Anmeldung: 22.06.2005
(73) Patentinhaber: Mechafin AG, 8954 Geroldswil (CH)
(72) Erfinder: Hess, Andreas, 8902 Urdorf (CH)
(74) Vertreter: Blum, Rudolf Emil

(56) Entgegenhaltungen:
- EP-A- 0 074 106
- EP-A- 0 376 015
- EP-A- 0 849 026
- US-A- 3 283 121

## Beschreibung

Die Anmeldung betrifft einen Schweissbrenner gemäss Oberbegriff des Anspruch 1, ein Verfahren zum Betrieb dieses Schweissbrenners und eine Verwendung dieses Schweissbrenners.

Schweissbrenner dieser Art, wie sie in EP 0 849 026 beschrieben sind, werden zum Drahtschweissen mit Schutzgas, z.B. beim MIG-Bogenschweissen, verwendet. Der Schweissdraht wird dabei über ein Schlauchpaket dem Schweissbrenner zugeführt. Ferner wird ein Schutzgas, meist zusammen mit dem Schweissdraht, dem Schweissbrenner zugeführt. Anstelle des Begriffes "Schweissbrenner" sind in diesem Zusammenhang auch die Begriffe "Brenner", "Brennerkopf" oder "Schwanenhals" gebräuchlich.

Der Schweissbrenner weist gewöhnlich einen Schaft auf, in welchen das Schlauchpaket mündet. Der Schweissbrenner weist ferner eine am Schaft befestigte Kontakteinheit auf, welche einerseits den Schweissstrom dem Draht zuführt und andererseits den Draht auf den Schweissort zuführt. Der Schweissbrenner weist zudem eine am Schaft befestigte Gasdüse auf, welche die Kontakteinheit umschliesst und auf diese Weise dazu dient das Schutzgas beim Schweissen möglichst lange im Bereich des Schweissortes zu halten.

Die Kontakteinheit, oder zumindest eine zur Kontakteinheit gehörende Kontaktspitze, sind ein Verbrauchselement und müssen daher leicht zu wechseln sein, was gewöhnlich mit einer Schraubverbindung gelöst wird. Die Gasdüse sollte ebenfalls leicht demontierbar sein, einerseits um sie auszuwechseln, andererseits um die Kontakteinheit besser zugänglich zu machen.

Die Kontaktspitze umschliesst den Schweissdraht dicht, so dass für das Schutzgas, welches dem Schweissbrenner zusammen mit dem Draht zugeführt wird, entsprechend der Kontaktspitzenöffnung für den Draht, mindestens eine Diffuseröffnung vorgesehen ist.

Schweissbrenner dieser Art sind hohen Betriebstemperaturen ausgesetzt. Wärme entsteht sowohl durch den Schweissbogen, als auch durch den Schweissstrom. Beim Schweissen mit gepulsten Strömen gibt es zudem induzierte Ströme, welche ebenfalls eine Wärmeentwicklung bewirken.

Es ist bekannt den Schaft und insbesondere auch die Gasdüse von aussen zu kühlen. Diese Lösungen sind meist unvollkommen, weil der thermische Widerstand zwischen den Wärmequellen und dem Kühlkreislauf relativ gross ist. Zudem sind bei diesen Lösungen Schweissbrenner und Kühlvorrichtung zusammen relativ gross und damit nur beschränkt geeignet für das Schweissen an schwer zugänglichen Orten.

Es ist ferner bekannt den Schaft des Schweissbrenners von innen mit Wasser zu kühlen. Die bekannten Lösungen sind jedoch oft aufwendig und teuer in der Herstellung. In seltenen Fällen kann sich auch das Problem stellen, dass der Kühlkreis undicht ist. Dies sollte in der Nähe des Schweissbogens jedoch auf keinen Fall vorkommen, da schon geringe Mengen von Wasser im Bereich der Schweissstelle die Qualität der Schweissnaht stark beeinträchtigen können.

Es ist ferner bekannt den Wasserkreislauf im Schaft so zu gestalten, dass die Gasdüse über ihre Kontaktfläche mit dem Schaft kühlbar ist.

Die bekannten Lösung sind unvollkommen, weil sie teuer in der Herstellung und/oder Wartung sind und/oder nur eine räumlich und/oder bezüglich ihrer Leistung beschränkte Kühlung erreichen.

Aus der Patentanmeldung EP 0 376 015 A2, die als nöchstliegenden Stand der Technik anzusehen ist, ist ein Schweissbrenner mit einem ersten Kühlwasserkreislauf zum Drahtschweissen mit Schutzgas bekannt, wobei der Schweissbrenner einen durch ein Innenrohr und ein Aussenrohr gebildeten Schaft mit einer Zufuhr für einen Schweissdraht und Schutzgas aufweist und das Innenrohr mit dem Aussenrohr einen ersten Zwangskreislauf bildet. An dem Schaft sind ein Stromkontaktdüsenträger und über diesen eine Kontaktdüse befestigt. Es ist eine Gasdüse vorgesehen, die die Kontaktdüse umschliesst. Es ist ferner ein Kühlwasserumlaufringkanal vorgesehen, der innerhalb des Gasdüsenträgers angeordnet ist und eine Zwangspassage bildet.

Es stellt sich daher die Aufgabe, einen Schweissbrenner der eingangs genannten Art bereitzustellen, der die oben genannten Nachteile zumindest teilweise vermeidet.

Die Aufgabe wird von Anspruch 1 gelöst, indem nicht nur der Schaft, sondern auch die Gasdüse einen Kühlwassermantel aufweist.

Dies hat den Vorteil, dass die Gasdüse gut kühlbar ist und insbesondere die bei Schweissen mit gepulstem Strom von Induktionsströmen erzeugte Wärme gut abführbar ist.

Gemäß bevorzugter Ausgestaltung reicht die Kontakteinheit bis hinter das vordere Ende des Kühlwassermantels im Schaft des Schweissbrenners.

Dies hat den Vorteil, dass der thermische Widerstand zwischen der Kontakteinheit und dem Kühlwasser gering ist.

Gemäß weiterer bevorzugter Ausgestaltung weist der Schaft eine plane Ringfläche aufsteht und über diese mit der Kontakteinheit in Kontakt steht.

Dies hat ebenfalls den Vorteil, dass der thermische Widerstand zwischen der Kontakteinheit und dem Kühlwasser gering ist.

In einer weiteren bevorzugten Ausführung der Erfindung weist der Schaft des Schweissbrenners ein Aussengewinde und die Kontakteinheit ein in das Aussengewinde greifendes Innengewinde auf. Die Kontakteinheit umschliesst dabei mit dem Innengewinde den Kühlwassermantel zumindest teilweise.

Dies hat den Vorteil einer grossen Verbindungsfläche zwischen Kontakteinheit und Schaft, und damit eines geringen thermischen Widerstandes. Die Verbindungsfläche ist insbesondere grösser, als bei einer entsprechenden in den Schaft eingeschraubten Kontakteinheit.

In einer weiteren bevorzugten Ausführung der Erfindung ist das vordere Ende des Schaftes durch eine plane und insbesondere plan geschliffene Ringfläche gebildet, welche mit der Kontakteinheit in Kontakt steht, wobei der Schaft ein Innenrohr und ein Aussenrohr aufweist, zwischen welchen der Kühlwassermantel gebildet ist, und die plane Ringfläche durch ein Ende vom Innenrohr und ein Ende vom Aussenrohr gebildet ist.

Dies hat den Vorteil, dass die Wärme vom Innenrohr und Aussenrohr, d.h. von beiden Wandelementen des Wassermantels direkt an das Kontaktelement übergeleitet wird, ohne dass die Wärmeleitung durch weitere Bauteilübergänge beeinträchtigt wird.

In einer weiten bevorzugten Ausführung der Erfindung weist der Schaft des Schweissbrenners ein Aussengewinde und die Kontakteinheit ein in dieses Aussengewinde greifendes Innengewinde auf. Die Kontakteinheit umschliesst mit dem Innengewinde den Kühlwassermantel zumindest teilweise. Ferner weist der Schaft an seinem vorderen Ende eine plane Ringfläche auf, über welche er mit der Kontakteinheit in Kontakt steht und welche dabei für die Kontakteinheit eine Anschlagfläche bildet.

Diese Ausführung hat den Vorteil, dass die Gewindefläche und Ringfläche zusammen eine besonders grosse Übergangsfläche für den Wärmefluss bilden. Ferner lässt sich der thermische Widerstand weiter reduzieren, indem die aufgeschraubte Kontakteinheit angezogen wird, so dass die Flächen von Kontakteinheit und Schaft zumindest teilweise in einem für Wärmeleitung günstigen Kraftkontakt stehen.

Im vorliegenden Dokument ist bei der Beschreibung der jeweiligen Schweissbrenner mit "vorne" schweissortseitig und mit "hinten" schlauchpaketseitig gemeint. Die Angaben "axial", "radial" und "zirkulär" beziehen sich jeweils auf die Längsachse des jeweiligen Schweissbrenners, bzw. Senkrechten dazu oder Kreise darum herum.

Weitere Vorteile und bevorzugte Ausführungsbeispiele ergeben sich aus den abhängigen Ansprüchen, sowie aus der nun folgenden Beschreibung anhand der Figuren. Dabei zeigen:
Fig. 1 eine schematische Darstellung des Kühlwasserkreislaufes einer bevorzugten Ausführung des erfindungsgemässen Schweissbrenners,
Fig. 2 einen Schnitt durch eine bevorzugte Ausführung des erfindungsgemässen Schweissbrenners,
Fig. 3 eine Seitenansicht einer bevorzugten Ausführung des erfindungsgemässen Schweissbrenners,
Fig. 4 einen Schnitt durch den Schweissbrenner von Fig. 3 entlang der Linie IV-IV,
Fig. 5 einen Schnitt durch den Schweissbrenner von Fig. 3 entlang der Linie V-V,
Fig. 6 einen Schnitt durch den Schweissbrenner von Fig. 3 entlang der Linie VI-VI,
Fig. 7 einen Schnitt durch den Schweissbrenner von Fig. 3 entlang der Linie VII-VII

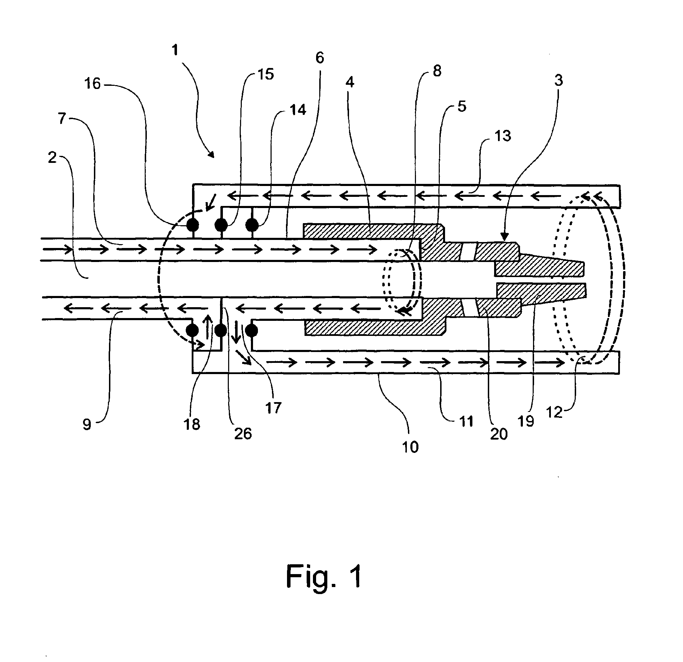

Fig. 1 zeigt eine schematische Darstellung des Kühlwasserkreislaufes einer bevorzugten Ausführung des erfindungsgemässen Schweissbrenners. Der Schaft 6 des Schweissbrenners 1 weist eine Zufuhr 2 für Schweissdraht und Schutzgas und eine Zufuhr 7 und eine Wegfuhr 9 für Kühlwasser auf. Direkt am vorderen Ende des Schaftes 6 ist in seinem Inneren ein Kühlwassermantel 8 vorgesehen. Der Kühlwassermantel 8 ist eine Zwangspassage des Wasserkreislaufes, d.h. das gesamte durch die Zufuhr des Wasserkreislaufes zugeführte Wasser muss den Kühlwassermantel 8 passieren. Das hintere Ende des Kühlwassermantels 8 ist bevorzugt in einem vorderen Bereich des Schaftes 6 angeordnet, insbesondere in einem Abstand von weniger als 2 cm vom vorderen Ende des Schaftes 6. Dies hat den Vorteil, dass der Schaft 6 vorne zwingend von Kühlwasser durchflossen wird. Der Kühlwassermantel 8 kann z.B. gebildet sein, indem im Schaft 6 ein im Wesentlichen zylindermantelflächenförmiger Hohlraum vorgesehen ist, wobei die Zufuhr 7 und die Wegfuhr 9 an diametral einander gegenüberliegenden Stellen an seinem hinteren Ende in diesen Hohlraum münden. Auf den Schaft 6 ist die Kontakteinheit 3 aufgeschraubt. Sie kann jedoch z.B. auch nur aufgesteckt oder mit einem Bajonettverschluss darauf befestigt sein. Die Kontakteinheit 3 besteht aus einer Kontaktspitze 19 und einem Gasdiffuser 20. Der Gasdiffuser 20 weist mindestens eine Gasdiffuseröffnung auf, durch welche das Schutzgas zum Schweissort gelangt. Auf dem Schaft 6 ist ferner die Gasdüse 10 insbesondere lösbar befestigt. Diese weist einen weiteren Kühlwassermantel 12 auf. Dieser weitere Kühlwassermantel 12 bildet ebenfalls eine Zwangspassage des Kühlwasserkreislaufes. Die Kühlwasserwegfuhr 9 im Schaft 6 ist hierzu durch eine Barriere 26 unterbrochen. Ferner ist im Schaft 6 vor und nach der Barriere 26 jeweils eine Öffnung 17, 18 vorgesehen. Durch die erste Öffnung 17 gelangt das Wasser zur Gasdüse 10. Durch die zweite Öffnung 18 gelangt es wieder in den Schaft 6. Die Kühlwasserübergänge zwischen Schaft 6 und Gasdüse 10 sind mit insgesamt drei O-Ringen 14, 15, 16 abgedichtet. Das Kühlwasser wird vom hinteren Bereich der Gasdüse 10 über eine Zufuhr 11 dem weiteren Kühlwassermantel 12 im vorderen Bereich zugeführt und über eine Wegfuhr 13 wieder zurück in den hinteren Bereich geführt. Der weitere Kühlwassermantel 12 erstreckt sich bevorzugt bis zum vorderen Ende der Gasdüse 10. Das hintere Ende des weiteren Kühlwassermantels 12 ist bevorzugt in einem vorderen Bereich der Gasdüse 10 angeordnet, insbesondere in einem Abstand von weniger als 7.5 cm vom vorderen Ende der Gasdüse 10. Dies hat den Vorteil, dass die Gasdüse 10 vorne zwingend vom Kühlwasser durchflossen wird.

Die grösste Wärmeentwicklung ist bei Schweissbrennern gewöhnlich im Bereich der Kontakteinheit, da diese am nächsten beim Schweissort ist. Das Kühlwasser wird daher bevorzugt zuerst durch den Kühlwassermantel 8 und dann erst durch den weiteren Kühlwassermantel 12 geleitet. Die Wärmeübertragung von der Kontakteinheit 3 auf den Schaft 6 erfolgt über die ebene Ringfläche 5 und das Gewinde 4. Die Kontakteinheit 3 bzw. deren Gasdiffuser 20 umschliesst dabei das Ende des Schaftes 6 und insbesondere zumindest einen Teil des darin angeordneten Kühlwassermantels 8.

Der Begriff "umschliessen" ist in diesem Zusammenhang derart zu verstehen, dass das umschliessende Element eine Manschetten-, Topf- oder Ringform aufweist und das Umschlossene darin angeordnet ist. Der Begriff "umschliessen" soll nicht ausschliessen, dass die Form Aussparungen, wie z.B. einen Spalt, aufweisen kann. Ferner beinhaltet der Begriff "umschliessen" keine Aussage darüber, ob das umschliessende Element das Umschlossene berührt.

Erfindungsgemäss reicht die Kontakteinheit bis hinter das vordere Ende des Kühlwassermantels. Sie reicht ferner bevorzugt bis hinter die Mitte des Kühlwassermantels. Insbesondere reicht sie bis zum hinteren Ende des Kühlwassermantels oder darüber hinaus. Diese Angaben betreffen jeweils die Anordnung bezüglich der Richtung der Schweissbrennerachse.

Wenn die Kontakteinheit gemäss obiger Ausführung an den Kühlwassermantel heran bzw. an diesem vorbeireicht, so hat dies den Vorteil, eines geringen thermischen Widerstandes zwischen Kontakteinheit und Kühlwasser. Insbesondere gibt es dadurch einen geringen thermischen Widerstand zwischen der Kontakteinheit und der durch den Kühlwassermantel gebildeten Zwangspassage des Kühlwasserkreislaufes.

Bevorzugt reicht die Kontakteinheit ausserhalb des Kühlwassermantels bis hinter dessen vorderes Ende. Sie kann jedoch zudem, insbesondere auch gleichzeitig, in den vom Kühlwassermantel umschlossenen Bereich hineinreichen. Vorzugsweise umschliesst die Kontakteinheit den Kühlwassermantel zumindest teilweise.

Bevorzugt steht die Kontakteinheit mit dem Kühlwasser bzw. dem Kühlwassermantel nicht in direktem Kontakt. Dies ermöglicht eine Demontage der Kontakteinheit ohne ein Öffnen des Kühlwasserkreislaufes. Der Kreislauf wird bevorzugt im Bereich der Kontaktspitze komplett versiegelt, d.h. z.B. verschweisst und/oder verlötet, so dass undichte Stellen in diesem Bereich sicher ausgeschlossen werden können.

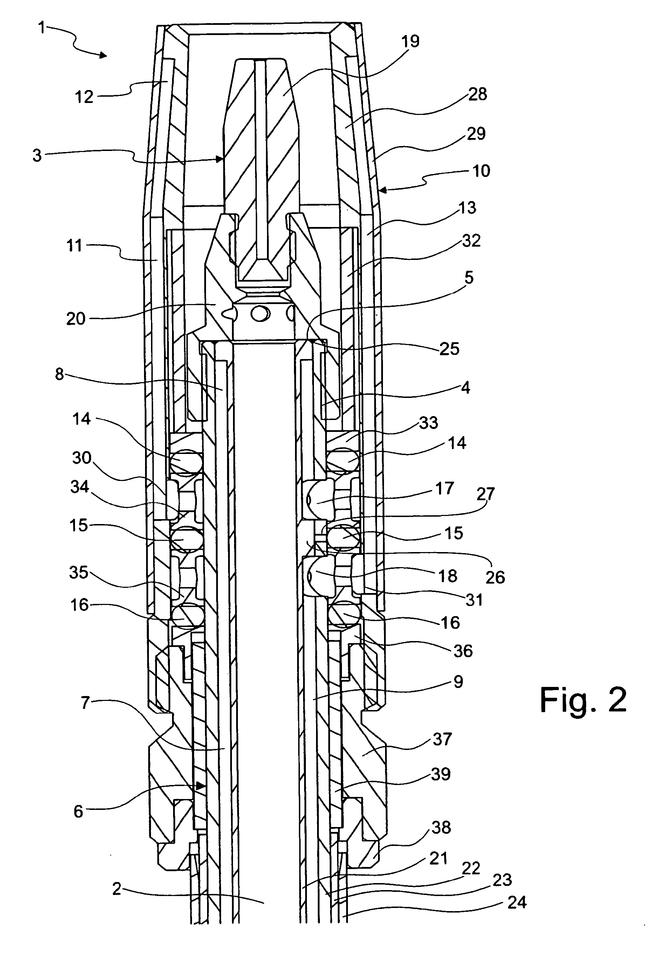

Fig. 2 zeigt eine bevorzugte Ausführung des erfindungsgemässen Schweissbrenners in einem Schnitt. Der Schaft 6 ist durch ein Schaftaussenrohr 22 und ein darin eingepasstes Schaftinnenrohr 21 gebildet. Im Schaftinnenrohr 21 verläuft die Draht- und Gaszufuhr 2. Das Schaftinnenrohr 21 weist zwei Abflachungen oder Nuten auf, durch welche Zufuhr 7 und Wegfuhr 9 des Kühlwasserkreislaufes gebildet sind. Im vorderen Teil hat das Schaftinnenrohr 21 ringsherum einen kleineren Radius, wodurch der Kühlwassermantel 8 gebildet ist. Unmittelbar am vorderen Ende hat das Innenrohr 21 wieder einen grösseren Radius, bzw. einen kranzförmigen Vorsprung, so dass es dort schlüssig ins Aussenrohr 22 passt. Die Anschlussstelle, bzw. die Anschlusslinie, weist bevorzugt eine Lötung 25 auf. Das vordere Ende des Schaftes 6, zu dem auch die Anschlussstelle gehört, ist bevorzugt plan geschliffen. Insbesondere ein möglicherweise leicht vorstehender Teil der Lötung 25 ist abgeschliffen. Das vordere Ende bildet so eine plane Ringfläche 5, welche sich aus dem Ende von Schaftinnenrohr 21, der Lötung 25 und dem Ende von Schaftaussenrohr 22 zusammensetzt. Der Kühlwassermantel 8 reicht bevorzugt möglichst dicht, insbesondere zumindest bis zu einem Abstand von 5 mm, an die plane Ringfläche bzw. das vordere Ende des Schaftes 6 heran. Die Verbindung von Schaftinnenrohr 21 und Schaftaussenrohr 22 ist demgemäss bevorzugt durch den ringförmigen, ca. 1 bis 5 mm breiten Vorsprung des Innenrohrs 21 und die Lötung 25 gebildet.

Für die auf das Schaftende aufgeschraubte Kontakteinheit 3 bildet die Ringfläche 5 einen Anschlag und insbesondere zugleich eine Wärmeleitungskontaktfläche, indem die Ringfläche mit einer entsprechenden Ringfläche der Kontakteinheit 3 in Kontakt steht. Das Schaftende weist ein Aussengewinde 4 auf, in welches ein entsprechendes Innengewinde der Kontakteinheit 3 eingreift. Die Kontakteinheit 3 umschliesst das Schaftende bevorzugt auf eine Länge von mindestens einem halben Schaftdurchmesser, so dass eine gute Wärmeüberleitung, d.h. ein geringer thermischer Widerstand, erreicht wird. Bevorzugt wird zumindest ein Teil, insbesondere mindestens die Hälfte, des Kühlwassermantels 8 oder der ganze Kühlwassermantel 8 im Schaft 6 von der Kontakteinheit 3 umschlossen. Der Kühlkreislauf bzw. der Kühlwassermantel 6 ist auch bei abgeschraubtem Kontaktelement 3 geschlossen, wodurch im vorderen Bereich eine vollständige Dichtheit garantiert werden kann.

Die Kontakteinheit 3 besteht aus dem Gasdiffuser 20 und der Kontaktspitze 19, welche in den Gasdiffuser 20 eingeschraubt ist. Der Gasdiffuser 20 weist fünf Öffnungen auf, durch welche das Schutzgas von der Drahtund Gaszufuhr in die Gasdüse bzw. den Bereich des Schweissortes gelangt. Die Öffnungen sind Bohrungen in bezüglich der Schaftachse radialer Richtung.

Auf dem Schaft 6 mit der Kontakteinheit 3 ist die Gasdüse 10 aufgesteckt und durch Anziehen der Ringschraube 37 darauf fixiert. Die Gasdüse 10 kann insbesondere ohne Werkzeug montiert und abgenommen werden. Die Ringschraube 37 weist vorne ein Aussengewinde auf, welches in ein Innengewinde am hinteren Ende der Gasdüse 10 eingreift. Hinten weist die Ringschraube 37 eine Grifffläche mit Riffelung auf, mittels derer sie von Hand gedreht werden kann, so dass die Gasdüse 10 ohne Werkzeug montiert oder demontiert werden kann. Die Ringschraube 37 liegt nicht direkt auf dem Schaft 6 auf, sondern auf einem Rohrstück 39 welches der thermischen und/oder elektrischen Isolation dient, und z.B. aus Glas, Keramik oder Kunststoff gefertigt sein kann. Die Gasdüse 10 weist ein Innenrohr 28 und ein Aussenrohr 29 auf. Ganz zuvorderst sind Innenrohr 28 und Aussenrohr 29 verbunden. Im vorderen Bereich bilden sie zusammen den weiteren Kühlwassermantel 12 in Form eines konusmantelflächenförmigen Hohlraums. Der weitere Kühlwassermantel 12 ist am vorderen Ende der Gasdüse 10 angeordnet und umschliesst das vordere Ende der Kontakteinheit 3. Der weitere Kühlwassermantel 12 ist bevorzugt eine Zwangspassage des Kühlwasserkreislaufes. In den weiteren Kühlwassermantel 12 mündet die Zufuhr 11 und die Wegfuhr 13 für Kühlwasser. Zufuhr 11 und Wegfuhr 13 sind durch Abflachungen oder Nuten des im hinteren Bereich der Gasdüse 10 sonst schlüssig in das Aussenrohr 29 passende Innenrohr 28 gebildet.

Der Kühlwasserkreislauf des Schweissbrenners setzt sich aus zwei Teilkreisläufen zusammen. Der erste Teilkreislauf führt durch den Schaft 6, und der zweite durch die Gasdüse 10. Der erste Teilkreislauf ist dabei unterbrochen und wird über den zweiten Teilkreislauf umgeleitet, d.h. die Kreisläufe sind im Wesentlichen in Serie geschaltet. Die Unterbrechung ist mittels einer Barriere 27 aus Hartlot gebildet. Zum Einbringen des Hartlotes ist im Schaftaussenrohr 22 ein Zugang 27 vorgesehen. Ferner sind im Schaftaussenrohr 22 direkt vor und nach der Barriere je eine Öffnung 17, 18 vorgesehen. Durch die erste Öffnung 17 im Schaft 6 gelangt das Kühlwasser zu einer ersten Öffnung 30 in der Gasdüse 10. Nach dem Passieren des Kreislaufes in der Gasdüse gelangt es dann durch eine zweite Öffnung 31 in der Gasdüse 10 zu der zweiten Öffnung 18 im Schaft 6. Zwischen Schaft 6 und Gasdüse 10 sind drei, den Schaft umschliessende O-Ringe 14, 15 und 16 vorgesehen, einer zwischen den Öffnungen 16 und 17 und je einer daneben. Zwischen den O-Ringen kann das Kühlwasser um den Schaft herum zirkulieren. Die O-Ringe liegen auf dem Schaft 6 auf und werden unter anderem mit zwei Abstandsringen 34, 35 in Position gehalten. Die Abstandsringe 34, 35 sind so ausgestaltet, dass sie den radialen und den zirkulären Kühlwasserfluss nicht behindern, und weisen hierfür insbesondere sechs radiale Öffnungen und sowohl innen als auch aussen eine zirkulär verlaufende Einbuchtung auf. Die Öffnungen 16 und 30 bzw. 17 und 31 müssen daher nur bezüglich ihrer Position in axialer Richtung auf einander abgestimmt sein, nicht jedoch bezüglich ihres Aufsitzwinkels, d.h. die Gasdüse 10 kann auf dem Schaft 6 beliebig gedreht werden, ohne den Kühlwasserfluss dadurch zu unterbrechen. Abstandsring 38, Ringschraube 37, Abstandsring 36, O-Ring 16, Abstandsring 35, O-Ring 15, Abstandsring 34, O-Ring 14, Abstandsring 33 und Rohr 32 sind in dieser Reihenfolge nacheinander schlüssig auf den Schaft 6 aufgesetzt. Durch das Anziehen der Gasdüse 10 mittels Ringschraube 37 können die O-Ringe achsial zusammengedrückt und damit radial expandiert werden. Auf diese Weise lässt sich der Kühlkreislauf abdichten und gleichzeitig Ringschraube 37 und Gasdüse 10 auf dem Schaft 6 fixieren. Der Schaft 6 ist auf der dem Schweissort abgewandten Seite, im Wesentlichen im Anschluss an Rohrstück 39 und Abstandsstück 38 von einem Isolationsrohr 23 und einem Aussenschutzrohr 24 umgeben.

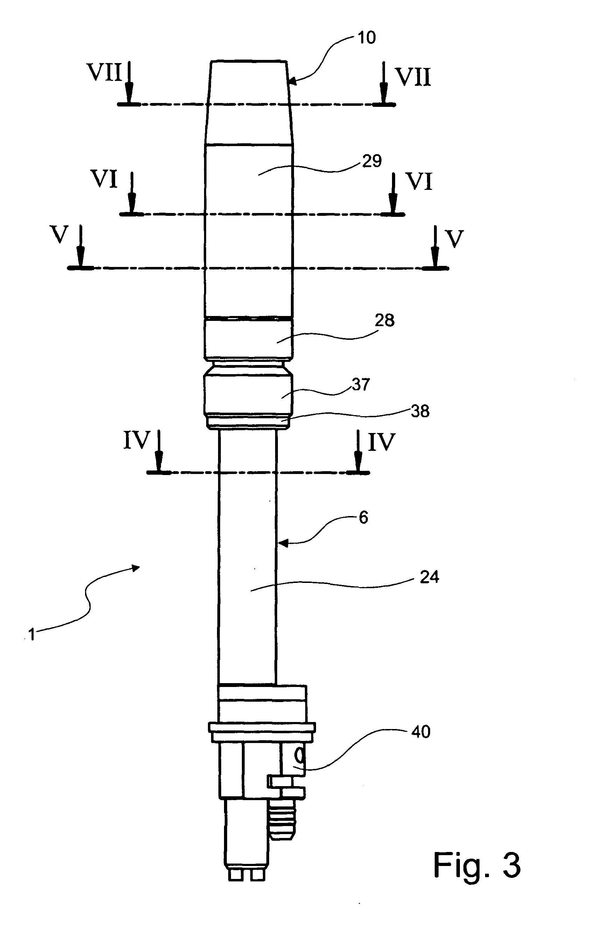

Fig. 3 zeigt die bevorzugte Ausführung des erfindungsgemässen Schweissbrenners aus Fig. 2 in einer Seitenansicht. Von der Gasdüse 10 ist das Aussenrohr 29, und am unteren Ende ein Abschnitt des Innenrohrs 28 zu sehen. Daran schliesst die Ringschraube 37 an, und an diese wiederum der Abstandsring 38. Vom Schaft 6 ist nur das Aussenschutzrohr 24 zu sehen. Der Schaft 6 mündet in den Sockel 40, welcher einen Anschluss für die Draht- und Gaszufuhr und die Anschüsse für Zufuhr und Wegfuhr von Kühlwasser aufweist.

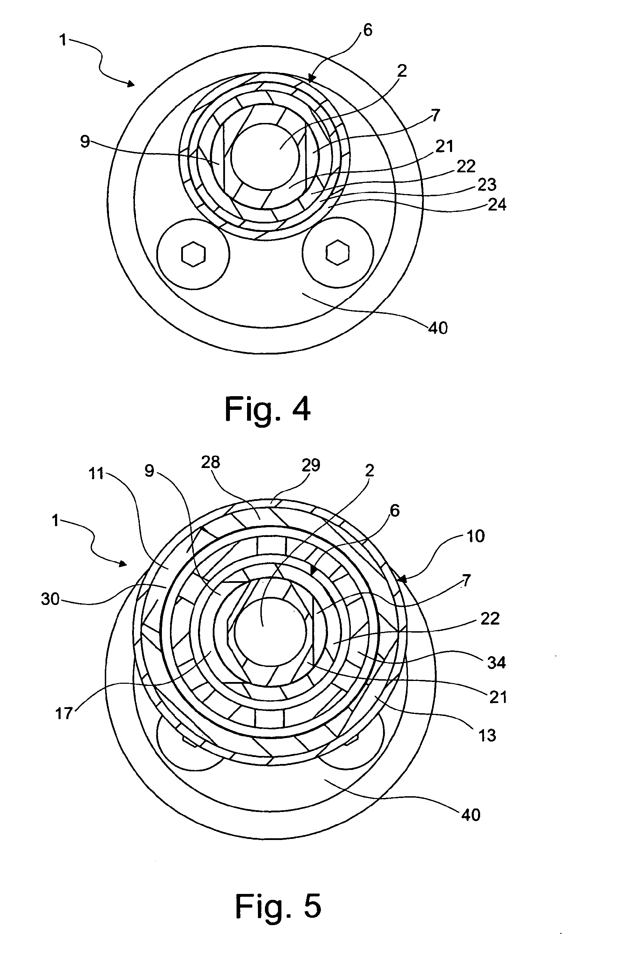

Fig. 4 zeigt einen Schnitt durch den Schweissbrenner von Fig. 3 entlang der Linie IV-IV, d.h. durch einen hinteren Abschnitt des Schaftes 6. Die Elemente des Schaftes 6 sind konzentrisch angeordnet. In der Mitte ist die Draht- und Gaszufuhr 2. Innenrohr 7 ist beidseits abgeflacht und bildet so zusammen mit dem Aussenrohr 22 die Zufuhr 7 und die Wegfuhr 9 für das Kühlwasser. Darum herum schliessen das Isolationsrohr 23 und das Aussenschutzrohr 24 an. Im Hintergrund ist der Sockel 40 gezeigt.

Fig. 5 zeigt einen Schnitt durch den Schweissbrenner von Fig. 3 entlang der Linie V-V, d.h. durch die Gasdüse 10, bzw. den Kopf des Schweissbrenners, und zwar im Bereich der Öffnung 17 im Schaft 6 des Schweissbrenners, d.h. dort wo das Kühlwasser vom Teilkreislauf des Schaftes 6 in den Teilkreislauf der Gasdüse 10 übertritt. In der Mitte ist die Draht- und Gaszufuhr 2. Innenrohr 7 ist beidseits abgeflacht und bildet so Zufuhr 7 und Wegfuhr 9 für das Kühlwasser. Im Bereich der Wegfuhr ist das Innenrohr 7 beidseits des abgeflachten Bereiches zusätzlich angeschrägt, um einen besseren Durchfluss durch die Öffnung 17 im Aussenrohr 22 zu ermöglichen. Im Abstandsring 34 sind Aussparungen vorgesehen, welche einen Kühlwasserfluss in radialer Richtung ermöglichen. Zudem ist entlang der Innenseite und entlang der Aussenseite des Rings 34 ein zirkularer Kühlwasserfluss möglich. Von Ausserhalb des Rings 34 kann das Kühlwasser durch die Öffnung 30 im Innenrohr 28 der Gasdüse 10 in die Kühlwasserzufuhr 11 der Gasdüse 10 übertreten. Das Innenrohr 28 der Gasdüse 10 ist beidseits angeschrägt und bildet so zusammen mit Aussenrohr 29 Kühlwasserzufuhr 11 und Kühlwasserwegfuhr 13 für den Kühlwassermantel der Gasdüse 10. Im Hintergrund ist der Sockel 40 gezeigt.

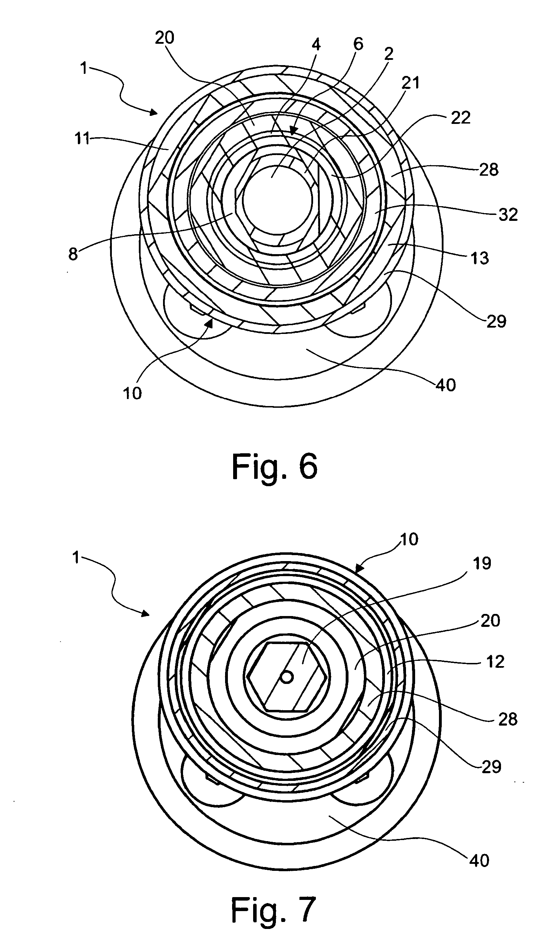

Fig. 6 zeigt einen Schnitt durch den Schweissbrenner von Fig. 3 entlang der Linie VI-VI, d.h. durch die Gasdüse 10, bzw. den Kopf des Schweissbrenners, und zwar im vordersten Bereich des Schaftes 6, d.h. dort wo das Kühlwasser den Kühlwassermantel 8 bildet. In der Mitte ist die Draht- und Gaszufuhr 2. Der Kühlwassermantel 8 ist zwischen Innenrohr 21 und Aussenrohr 22. Das Aussenrohr weist das Aussengewinde 4 auf, welches in ein Innengewinde des Gasdiffusers 20 greift. Der Gasdiffuser 20 weist zwei Abflachungen auf, welche als Angriffsflächen für ein Montagewerkzeug dienen. Zwischen Innenrohr 28 und Aussenrohr 29 der Gasdüse 10 verläuft die Zufuhr 11 und Wegfuhr 13 für das Kühlwasser. Im Hintergrund ist der Sockel 40 gezeigt.

Fig. 7 zeigt einen Schnitt durch den Schweissbrenner von Fig. 3 entlang der Linie VII-VII, d.h. im vorderen Bereich des Schweissbrenners, durch die Gasdüse 10 und die Kontaktspitze 19. Zwischen Innenrohr 28 und dem Aussenrohr 29 der Gasdüse 10 ist der weitere Kühlwassermantel 12. Im Hintergrund ist der Sockel 40 gezeigt.

Im obigen Ausführungsbeispiel ist der Kühlwassermantel durch einen im Wesentlichen zylindermantelflächenförmigen Hohlraum mit diametral angeordnetem Zuund Wegfluss gebildet. Das in den Hohlraum strömende Kühlwasser fliesst dabei ca. je zur Hälft durch einen der beiden Umflussabschnitte von jeweils im Wesentlichen 180°. Zu- und Wegfluss können jedoch auch unmittelbar nebeneinander angeordnet und z.B. durch einen Steg getrennt sein, so dass es nur einen einzigen Umflussabschnitt von Im Wesentlichen 360° gibt. Der Kühlwassermantel kann sich ferner auch nur über einen Teil des Umfangs, also z.B. nur 270°, erstrecken. Der Kühlwassermantel kann ausserdem auch durch ein Vielzahl von ringförmigen und/oder axialen Kanälen oder z.B. durch meanderförmige Kanäle gebildet sein.

Im obigen Ausführungsbeispiel besteht die Kontakteinheit aus einem Gasdiffuser und der Kontaktspitze. Es ist jedoch auch möglich den Gasdiffuser als Teil des Schaftes auszubilden. Die Kontakteinheit besteht dabei dann bevorzugt aus einem Kontaktspitzenträger und der Kontaktspitze.

Der erfindungsgemässe Schweissbrenner wird bevorzugt mit Wasser gekühlt. Es können jedoch auch andere flüssige oder auch gasförmige Kühlmittel verwendet werden.

Der erfindungsgemässe Schweissbrenner eignet sich z.B. zum MIG-Schweissen, d.h. Metall-Inertgas-Schweissen, oder zum MAG-Schweissen, d.h. Metall-Aktivgas-Schweissen.

Der erfindungsgemässe Schweissbrenner eignet sich ferner besonders zum Schweissen mit gepulsten Strömen, z.B. im Takt von 1 bis 25 ms, insbesondere weil auch die von Induktionströmen, unter anderem in der Gasdüse, erzeugte Wärme gut abgeführt wird.

Der erfindungsgemässe Schweissbrenner eignet sich ferner besonders gut zum Einsatz in Roboterschweissanlagen.

## Patentansprüche

1. Schweissbrenner mit Kühlwasserkreislauf zum Drahtschweissen mit Schutzgas, wobei der Schweissbrenner
- einen Schaft (6) mit einer Zufuhr (2) für Schweissdraht und Schutzgas, mit einer Zufuhr (7) und einer Wegfuhr (9) für Kühlwasser und mit einem Kühlwassermantel (8),
- eine am Schaft (6) befestigte Kontakteinheit (3), durch welche der Schweissdraht einem Schweissort zuführbar ist,
- mindestens eine Gasdiffuseröffnung, durch welche das Schutzgas zum Schweissort gelangt und
- eine Gasdüse (10), welche die Kontakteinheit (3) umschliesst, um das Schutzgas zumindest teilweise im Bereich des Schweissortes zu halten, und
- einen weiteren Kühlwassermantel (12), welcher in der Gasdüse (10) angeordnet ist,
aufweist, **dadurch gekennzeichnet, dass** der weitere Kühlwassermantel (12) sich bis zu einem vorderen Ende der Gasdüse (10) erstreckt und insbesondere das vordere Ende der Kontakteinheit (3) umschliesst.

2. Schweissbrenner gemäss Anspruch 1, **dadurch gekennzeichnet, dass** die die Kontakteinheit (3) bis hinter ein vorderes Ende des Kühlwassermantels (8) reicht.

3. Schweissbrenner gemäss einem der vorhergehenden Ansprüche, **dadurch gekennzeichnet, dass** die Kontakteinheit (3) mindestens bis zu einer Mitte und insbesondere bis zu einem hinteren Ende des Kühlwassermantels (8) oder über dieses hinaus reicht.

4. Schweissbrenner gemäss einem der vorhergehenden Ansprüche, **dadurch gekennzeichnet, dass** die Kontakteinheit (3) ausserhalb des Kühlwassermantels (8) hinter dessen vorderes Ende reicht, insbesondere wobei sie den Kühlwassermantel (8) zumindest teilweise umschliesst.

5. Schweissbrenner gemäss Anspruch 4, **dadurch gekennzeichnet, dass** der Schaft (6) ein Aussengewinde (4) aufweist und die Kontakteinheit (3) ein Innengewinde aufweist, mit welchem sie in das Aussengewinde (4) greift, wobei insbesondere das Innengewinde den Kühlwassermantel (8) zumindest teilweise umschliesst.

6. Schweissbrenner gemäss Anspruch 1, **dadurch gekennzeichnet, dass** der Schaft (6) eine plane Ringfläche (5) aufweist und über diese mit der Kontakteinheit (3) in Kontakt steht.

7. Schweissbrenner gemäss Anspruch 6, **dadurch gekennzeichnet, dass** ein vorderes Ende des Schafts (6) durch die plane Ringfläche (5) gebildet ist.

8. Schweissbrenner gemäss einem der Ansprüche 6 oder 7, **dadurch gekennzeichnet, dass** der Schaft (6) ein Innenrohr (21) und ein Aussenrohr (22) aufweist, zwischen welchen der Kühlwassermantel (8) gebildet ist, und die plane Ringfläche (5) durch ein Ende vom Innenrohr (21), ein Ende vom Aussenrohr (22) und insbesondere eine Lötung (25) gebildet ist.

9. Schweissbrenner gemäss einem der Ansprüche 6 bis 8, **dadurch gekennzeichnet, dass** der Kühlwassermantel (8) zumindest bis zu einem Abstand von 5 mm an die plane Ringfläche (5) heranreicht.

10. Schweissbrenner gemäss einem der Ansprüche 1 bis 5 und/oder einem der Ansprüche 6 bis 9.

11. Schweissbrenner gemäss Anspruch 10, **dadurch gekennzeichnet, dass** der Kühlwassermantel (8) eine Zwangspassage des Kühlwasserkreislaufes bildet.

12. Schweissbrenner gemäss einem der Ansprüche 10 oder 11, **dadurch gekennzeichnet, dass** ein hinteres Ende des Kühlwassermantels (8) in einem vorderen Bereich des Schafts (6) angeordnet ist, insbesondere in einem Abstand von wendiger als 2 cm von einem vorderen Ende des Schafts (6).

13. Schweissbrenner gemäss einem der Ansprüche 10 bis 12, **dadurch gekennzeichnet, dass** die Kontakteinheit (3) den Kühlwasserkreislauf nicht direkt kontaktiert, so dass sie demontierbar ist, ohne **dadurch** den Kühlwasserkreislauf zu öffnen.

14. Schweissbrenner gemäss einem der Ansprüche 10 bis 13, **dadurch gekennzeichnet, dass** die mindestens eine Gasdiffuseröffnung durch die Kontakteinheit (3) gebildet ist.

15. Schweissbrenner gemäss einem der Ansprüche 10 bis 14 **dadurch gekennzeichnet, dass** die Kontakteinheit (3) einen Gasdiffuser (20), insbesondere mit radialen Gasdiffuseröffnungen für das Schutzgas, und eine Kontaktspitze (19), welche in den Gasdiffuser (20) geschraubt ist, aufweist.

16. Schweissbrenner gemäss einem der Ansprüche 10 bis 15, **dadurch gekennzeichnet, dass** der Schaft (6) ein Innenrohr (21) und ein Aussenrohr (22) aufweist, wobei die Zufuhr (7) für Kühlwasser und die Wegfuhr (9) für Kühlwasser zwischen den beiden Rohren (21, 22) verläuft und insbesondere durch jeweils eine Nut und/oder Abflachung des Innenrohres (21) gebildet ist.

17. Schweissbrenner gemäss einem der vorhergehenden Ansprüche, **dadurch gekennzeichnet, dass** der weitere Kühlwassermantel (12) eine Zwangspassage des Kühlwasserkreislaufes bildet.

18. Schweissbrenner gemäss einem der vorhergehenden Ansprüche, **dadurch gekennzeichnet, dass** ein hinteres Ende des weiteren Kühlwassermantels (12) in einem vorderen Bereich der Gasdüse (10) angeordnet ist, insbesondere in einem Abstand von weniger als 7.5 cm vom vorderen Ende der Gasdüse (10).

19. Schweissbrenner gemäss einem der vorhergehenden Ansprüche, **dadurch gekennzeichnet, dass** die Gasdüse (10) abnehmbar ist.

20. Schweissbrenner gemäss einem der vorhergehenden Ansprüche, **dadurch gekennzeichnet, dass** er zu einem Anschluss der Gasdüse (10) an den Kühlwasserkreislauf
- mindestens zwei Öffnungen (17, 18) im Schaft (6), welche beide einen Zugang zu einem Kühlwasserkanal bilden,
- eine Barriere (26), insbesondere ein durch einen Lötzugang (27) eingebrachtes Lot, welche den Kühlwasserkanal zwischen den beiden Öffnungen (17, 18) unterbricht und
- mindestens drei O-Ringe, welche seitlich und zwischen den Öffnungen (17, 18) angeordnet sind,
aufweist.

21. Verfahren zum Betrieb des Schweissbrenners gemäss einem der vorhergehenden Ansprüche, **dadurch gekennzeichnet, dass** Kühlwasser zuerst den Kühlwassermantel (8) und dann gegebenenfalls den weitere Kühlwassermantel (12) durchfliesst.

22. Verwendung des Schweissbrenners gemäss einem der Ansprüche 1 bis 20 zum MIG/MAG-Schweissen und/oder zum Schweissen mit einer Roboterschweissanlage und/oder zum Schweissen mit gepulsten Schweissströmen, insbesondere gepulsten Schweissströmen, welche im Takt von ca. 1 bis 25 ms gepulst sind.

## Claims

1. Welding torch with a cooling water circuit for wire welding with inert gas, wherein the welding torch comprises
- a shank (6) with a supply (2) for welding wire and inert gas, with a supply (7) and an outlet (9) for cooling water and with a cooling water jacket (8),
- a contact unit (3) mounted on the shaft (6), through which the welding wire can be fed to a welding place,
- at least one gas diffuser opening, through which the inert gas arrives at the welding place and
- a gas nozzle (10), that encloses the contact unit (3) to hold the inert gas at least partly in the range of the welding place, and
- a further cooling water jacket (12) that is arranged in the gas nozzle (10),
**characterized in that** the further cooling water jacket (12) extends to a front end of the gas nozzle (10) and in particular encloses the front end of the contact unit (3).

2. Welding torch according to claim 1, **characterized in that** the contact unit (3) ranges till behind a front end of the cooling water jacket (8).

3. Welding torch according to one of the preceding claims, **characterized in that** the contact unit (3) ranges at least to a centre and in particular to a rear end of the cooling water jacket (8) or beyond this.

4. Welding torch according to one of the preceding claims, **characterized in that** the contact unit (3) outside the cooling water jacket (8) ranges behind its front end, in particular wherein it encloses the cooling water jacket (8) at least partially.

5. Welding torch according to claim 4, **characterized in that** the shank (6) has an external thread (4) and that the contact unit (3) has an internal thread, with which it engages with the external thread (4), wherein in particular the internal thread encloses the cooling water jacket (8) at least partially.

6. Welding torch according to claim 1, **characterized in that** the shank (6) has a planar ring surface (5) and is in contact with the contact unit (3) through this.

7. Welding torch according to claim 6, **characterized in that** a front end of the shank (6) is formed by the planar ring surface (5).

8. Welding torch according to one of the claims 6 or 7, **characterized in that** the shank (6) has an inner tube (21) and an outer tube (22), between which the cooling water jacket (8) is formed, and that the planar ring surface (5) is formed by an end of the inner tube (21), an end of the outer tube (22) and in particular a soldering (25).

9. Welding torch according to one of the claims 6 to 8, **characterized in that** the cooling water jacket (8) comes up at least till a distance of 5 mm to the planar ring surface (5).

10. Welding torch according to one of the claims 1 to 5 and/or one of the claims 6 to 9.

11. Welding torch according to claim 10, **characterized in that** the cooling water jacket (8) forms a must-run of the cooling water circuit.

12. Welding torch according to one of the claims 10 or 11, **characterized in that** the rear end of the cooling water jacket (8) is arranged in a front region of the shank (6), in particular in a distance of less than 2 cm from a front end of the shank (6).

13. Welding torch according to one of the claims 10 to 12, **characterized in that** the contact unit (3) does not contact the cooling water circuit directly, so that it can be dismounted without opening the cooling water circuit thereby.

14. Welding torch according to one of the claims 10 to 13, **characterized in that** the at least one gas diffuser opening is formed by the contact unit (3).

15. Welding torch according to one of the claims 10 to 14, **characterized in that** the contact unit (3) comprises a gas diffuser (20), in particular with radial gas diffuser openings for the inert gas, and a contact tip (19) that is screwed into the gas diffuser (20).

16. Welding torch according to one of the claims 10 to 15, **characterized in that** the shank (6) comprises an inner tube (21) and an outer tube (22), wherein the supply (7) for the cooling water and the outlet (9) for the cooling water runs between the two tubes (21, 22) and in particular is formed by a groove and/or a flattening, respectively, of the inner tube (21).

17. Welding torch according to one of the preceding claims, **characterized in that** the further cooling water jacket (12) forms a must-run of the cooling water circuit.

18. Welding torch according to one of the preceding claims, **characterized in that** the rear end of the further cooling water jacket (12) is arranged in a front region of the gas nozzle (10), in particular in a distance of less than 7.5 cm from the front end of the gas nozzle (10).

19. Welding torch according to one of the preceding claims, **characterized in that** the gas nozzle (10) is removable.

20. Welding torch according to one of the preceding claims, **characterized in that** it comprises for a connection of the gas nozzle (10) to the water cooling circuit
- at least two openings (17, 18) in the shank (6), that both form an entry to a cooling water channel,
- a barrier (26), in particular a solder applied via a solder inlet (27), that intercepts the cooling water channel between the two openings (17, 18) and
- at least three O-rings, that are arranged laterally and between the openings (17, 18).

21. Method for the operation of the welding torch according to one of the preceding claims, **characterized in that** cooling water first runs through the cooling water jacket (8) and then if applicable through the further cooling water jacket (12).

22. Use of the welding torch according to one of the claims 1 to 20 for MIG/MAG-welding and/or for welding with a robot welding machine and/or for welding with pulsed welding currents, in particular pulsed welding currents, that are pulsed in time with approximately 1 to 25 ms.

## Revendications

1. Chalumeau de soudage avec circuit d'eau de refroidissement pour le soudage à fil sous atmosphère protectrice, le chalumeau de soudage comportant
- une tige (6) avec un moyen d'amenée (2) du fil d'apport et du gaz protecteur, avec un conduit d'amenée (7) et un conduit d'évacuation (9) de l'eau de refroidissement et avec une chemise d'eau de refroidissement (8),
- une unité de contact (3), qui est fixée à la tige (6) et à travers laquelle le fil d'apport peut être acheminé vers le lieu de soudage,
- au moins une ouverture de diffusion du gaz, à travers laquelle le gaz protecteur parvient sur le lieu de soudage, et
- un buse de gaz (10), qui entoure l'unité de contact (3) pour maintenir le gaz protecteur au moins en partie dans la zone du lieu de soudage, et
- une chemise d'eau de refroidissement (12) supplémentaire, qui est disposée dans la buse de gaz (10),
**caractérisé en ce que** la chemise d'eau de refroidissement (12) supplémentaire s'étend jusqu'à l'extrémité avant de la buse de gaz (10) et entoure en particulier l'extrémité avant de l'unité de contact (3).

2. Chalumeau de soudage selon la revendication 1, **caractérisé en ce que** l'unité de contact (3) s'étend jusque derrière une extrémité avant de la chemise d'eau de refroidissement (8).

3. Chalumeau de soudage selon l'une quelconque des revendications précédentes, **caractérisé en ce que** l'unité de contact (3) s'étend au moins jusqu'à un milieu et en particulier jusqu'à une extrémité arrière de la chemise d'eau de refroidissement (8) ou au-delà de celle-ci.

4. Chalumeau de soudage selon l'une quelconque des revendications précédentes, **caractérisé en ce que** l'unité de contact (3) s'étend en dehors de la chemise d'eau de refroidissement (8) derrière l'extrémité arrière de celle-ci, en particulier en entourant au moins en partie la chemise d'eau de refroidissement (8).

5. Chalumeau de soudage selon la revendication 4, **caractérisé en ce que** la tige (6) comporte un filetage extérieur (4) et l'unité de contact (3) comporte un filetage intérieur avec lequel elle engrène dans le filetage extérieur (4), sachant qu'en particulier le filetage intérieur entoure au moins en partie la chemise d'eau de refroidissement (8).

6. Chalumeau de soudage selon la revendication 1, **caractérisé en ce que** la tige (6) comporte une surface annulaire (5) plane et, par l'intermédiaire de celle-ci, est en contact avec l'unité de contact (3).

7. Chalumeau de soudage selon la revendication 6, **caractérisé en ce qu'**une extrémité avant de la tige (6) est formée par la surface annulaire (5) plane.

8. Chalumeau de soudage selon la revendication 6 ou 7, **caractérisé en ce que** la tige (6) comporte un tube intérieur (21) et un tube extérieur (22), entre lesquels est formée la chemise d'eau de refroidissement (8), et la surface annulaire (5) plane est formée par une extrémité du tube intérieur (21), une extrémité du tube extérieur (22) et, en particulier, un brasage (25).

9. Chalumeau de soudage selon l'une quelconque des revendications 6 à 8, **caractérisé en ce que** la chemise d'eau de refroidissement (8) s'étend au moins jusqu'à une distance de 5 mm de la surface annulaire (5) plane.

10. Chalumeau de soudage selon l'une quelconque des revendications 1 à 5 et/ou l'une quelconque des revendications 6 à 9.

11. Chalumeau de soudage selon la revendication 10, **caractérisé en ce que** la chemise d'eau de refroidissement (8) forme un passage forcé du circuit d'eau de refroidissement.

12. Chalumeau de soudage selon la revendication 10 ou 11, **caractérisé en ce qu'**une extrémité arrière de la chemise d'eau de refroidissement (8) est disposée dans une zone avant de la tige (6), en particulier à une distance de moins de 2 cm d'une extrémité avant de la tige (6).

13. Chalumeau de soudage selon l'une quelconque des revendications 10 à 12, **caractérisé en ce que** l'unité de contact (3) n'entre pas directement en contact avec le circuit d'eau de refroidissement, de telle sorte qu'elle peut être démontée sans que, de ce fait, il soit nécessaire d'ouvrir le circuit d'eau de refroidissement.

14. Chalumeau de soudage selon l'une quelconque des revendications 10 à 13, **caractérisé en ce que** ladite au moins une ouverture de diffusion du gaz est formée par l'unité de contact (3).

15. Chalumeau de soudage selon l'une quelconque des revendications 10 à 14, **caractérisé en ce que** l'unité de contact (3) comporte un diffuseur de gaz (20), en particulier avec des orifices radiaux de diffusion du gaz de protection, et une pointe de contact (19) qui est vissée dans le diffuseur de gaz (20).

16. Chalumeau de soudage selon l'une quelconque des revendications 10 à 15, **caractérisé en ce que** la tige (6) comporte un tube intérieur (21) et un tube extérieur (22), le conduit d'amenée (7) de l'eau de refroidissement et le conduit d'évacuation (9) de l'eau de refroidissement s'étendant entre les deux tubes (21, 22) et étant formés en particulier par respectivement une rainure et/ou un méplat du tube intérieur (21).

17. Chalumeau de soudage selon l'une quelconque des revendications précédentes, **caractérisé en ce que** la chemise d'eau de refroidissement (12) supplémentaire forme un passage forcé du circuit d'eau de refroidissement.

18. Chalumeau de soudage selon l'une quelconque des revendications précédentes, **caractérisé en ce qu'**une extrémité arrière de la chemise d'eau de refroidissement (12) supplémentaire est disposée dans une zone avant de la buse de gaz (10), en particulier à une distance de moins de 7,5 cm de l'extrémité avant de la buse de gaz (10).

19. Chalumeau de soudage selon l'une quelconque des revendications précédentes, **caractérisé en ce que** la buse de gaz (10) est démontable.

20. Chalumeau de soudage selon l'une quelconque des revendications précédentes, **caractérisé en ce que**, pour un raccordement de la buse de gaz (10) au circuit d'eau de refroidissement, ledit chalumeau comporte
- au moins deux orifices (17, 18) dans la tige (6), lesquels forment tous deux un accès vers un conduit d'eau de refroidissement,
- une barrière (26), en particulier un fil d'apport de brasage, introduit par un orifice d'admission (27) du fil d'apport de brasage, laquelle interrompt le conduit d'eau de refroidissement entre les deux orifices (17, 18), et
- au moins trois joints toriques, qui sont disposés latéralement et entre les orifices (17, 18).

21. Procédé pour le fonctionnement du chalumeau de soudage selon l'une quelconque des revendications précédentes, **caractérisé en ce que** l'eau de refroidissement circule d'abord à travers la chemise d'eau de refroidissement (8) et ensuite, le cas échéant, à travers la chemise d'eau de refroidissement (12) supplémentaire.

22. Utilisation du chalumeau de soudage selon l'une quelconque des revendications 1 à 20 pour le soudage MIG/MAG et/ou pour le soudage avec une installation de soudage robotisée et/ou pour le soudage avec des flux pulsés, en particulier des flux pulsés avec une cadence de 1 à 25 ms environ.
